# EUROPÄISCHE PATENTSCHRIFT

(11) **EP 0 483 604 B1**
(45) Veröffentlichungstag und Bekanntmachung des Hinweises auf die Patenterteilung: **24.05.1995**
(21) Anmeldenummer: 91117678.2
(22) Anmeldetag: 16.10.1991
(51) Int. Cl.: H04N 3/233

(54) **Verfahren zum Verkürzen der Vertikalrücklaufphase eines Elektronenstrahls in einer Kathodenstrahlröhre**
Methode for reducing an electron beam vertical flyback phase in a cathode raytube
Méthode par raccourcir la phase de retour vertical d'un rayon électronique dans un tube à rayon cathodique

(30) Priorität: 30.10.1990 DE 4034530
(43) Veröffentlichungstag der Anmeldung: 06.05.1992
(73) Patentinhaber: SIEMENS AKTIENGESELLSCHAFT, 80333 München (DE)
(72) Erfinder: Burkhardt, Klaus, W-7527 Kraichtal (DE); Eckhardt, Wolfgang, W-7500 Karlsruhe (DE)

(56) Entgegenhaltungen:
- DE-A- 3 442 818
- US-A- 4 777 411
- IBM TECHNICAL DISCLOSURE BULLETIN, Band 26, Nr. 12, 12. Mai 1984, Seiten 6425,6426, New York, US; T. AOKI et al.: "Pincushion distortion correction circuit"

## Beschreibung

Die Erfindung betrifft ein Verfahren zum Verkürzen der Vertikalrücklaufphase eines Elektronenstrahls in einer Kathodenstrahlröhre gemäß dem Oberbegriff des Anspruchs 1.

Gewöhnlich erscheint ein Rechteck, das auf einem Bildschirm einer Kathodenstrahlröhre wiedergegeben werden soll, mit konkaven Seiten. Diese sogenannte Kissenverzeichnung entsteht dadurch, daß der Krümmungsradius des Bildschirms größer ist als der Ablenkradius, der den Abstand des Ablenkmittelpunktes der Elektronenstrahlen von der Mitte der Innenfläche des Bildschirms bezeichnet. Eine Kissenverzeichnung in vertikaler Richtung des Bildschirms kann durch eine sogenannte Nord-Süd-Korrekturschaltung beseitigt werden. Mit dieser werden dem ursprünglich sägezahnförmigen Vertikalablenkstrom horizontalfrequente Parabelströme überlagert, deren Amplitude von der Bildmitte ausgehend zum oberen und unteren Bildrand hin ungefähr proportional zunimmt.

Aus der DE-OS 35 02 622 ist eine Nord-Süd-Korrekturschaltung bekannt, die über einen Übertrager mit einer Vertikalendstufe gekoppelt ist. Bei einer derartigen Schaltungsanordnung ist die Hauptinduktivität des Übertragers zweckmäßig so bemessen, daß diese während der Vertikalhinlaufphase für die Vertikalablenkstufe einen niederohmigen Widerstand und für die Nord-Süd-Korrekturschaltung einen hochohmigen Widerstand darstellt. Dadurch wird erreicht, daß der Vertikalablenkstrom, den man sich aus mehreren sinusförmigen Einzelströmen unterschiedlicher Frequenzen zusammengesetzt denken kann, nicht auf die Nord-Süd-Korrektureinrichtung überlagert wird und störend auf den Korrekturstrom wirkt. Der Korrekturstrom von der Nord-Süd-Korrekturschaltung wird auf die Vertikalendstufe übertragen und - wie gewünscht - dem Vertikalablenkstrom überlagert.

Dagegen wird während der im Vergleich zur Vertikalhinlaufphase kurzen Vertikalrücklaufphase, in der der Vertikalablenkstrom aus höherfrequenten Einzelströmen als während der Vertikalhinlaufphase besteht, ein Teil dieser Einzelströme auf die Nord-Süd-Korrekturschaltung übertragen. Die Nord-Süd-Korrekturschaltung muß diese Störgrößen zunächst ausregeln, um den erforderlichen Korrekturstrom zu erzeugen. Das bewirkt eine Verlängerung der Vertikalrücklaufphase.

Aus der US-A-4 777 411 ist ein Verfahren bekannt, zur Verhinderung der Schwingneigung der Nord-Süd-Korrekturstufe bedingt durch den vertikalen Rüchlaufimpuls den Ausgangsverstärker der Stufe in der vertikalen Austastlüche in dem hochohmigen Zustand zu Schalten.

Der vorliegenden Erfindung liegt die Aufgabe zugrunde, bei einem Verfahren der eingangs genannten Art die Vertikalrücklaufphase zu verkürzen.

Diese Aufgabe wird durch die im kennzeichnenden Teil des Anspruchs 1 angegebenen Maßnahmen gelöst.

Dadurch, daß während der Vertikalrücklaufphase, in der der Vertikalablenkstrom kein Korrektursignal benötigt, eine Wicklung des Übertragers, z. B. die Primärwicklung, kurzgeschlossen und die Nord-Süd-Korrektureinrichtung hochohmig geschaltet ist, wird die Vertikalrücklaufphase verkürzt. Die Nord-Süd-Korrektureinrichtung ist von der Vertikalablenkschaltung abgeschaltet und es werden keine störenden hochfrequenten Anteile des Vertikalablenkstromes der Nord-Süd-Korrektureinrichtung übertragen. Dabei wird die Verlustleistung in der Nord-Süd-Korrektureinrichtung vorteilhaft vermindert.

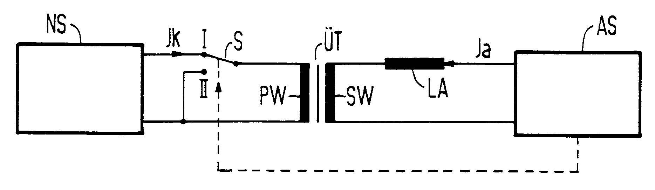

Anhand der Zeichnung, in der ein Ausführungsbeispiel veranschaulicht ist, wird das neue Verfahren näher erläutert.

Die Figur zeigt ein Blockschaltbild einer Nord-Süd-Korrekturanordnung.

Eine an sich bekannte Vertikalablenkschaltung AS ist über einen Übertrager ÜT mit einer ebenfalls an sich bekannten Nord-Süd-Korrektureinrichtung NS gekoppelt. Dabei ist die Vertikalablenkschaltung AS über Ablenkspulen LA an der Sekundärwicklung SW und die Nord-Süd-Korrektureinrichtung NS über einen Schalter S an der Primärwicklung PW des Übertragers ÜT angeschlossen. Zu Beginn des Vertikalrücklaufs eines Elektronenstrahls in einer hier nicht dargestellten Kathodenstrahlröhre erzeugt die Vertikalablenkschaltung AS aus der an der Ablenkspule LA anliegenden Ablenkspannung einen Steuerimpuls. Dieser bewirkt, daß der Schalter S von einer Schalterstellung I in eine Schalterstellung II umschaltet und die Primärwicklung PW des Übertragers ÜT kurzgeschlossen und die Nord-Süd-Korrektureinrichtung NS in einen hochohmigen Zustand geschaltet wird. Die hochfrequenten Anteile des Vertikalablenkstromes Ia, die der Übertrager ÜT überträgt, wirken nicht störend auf den Korrekturstrom Ik. Zum Schutz der Nord-Süd-Korrektureinrichtung NS ist diese in einen hochohmigen Zustand geschaltet, und die Verlustleistung der Nord-Süd-Korrektureinrichtung ist vorteilhaft vermindert. Dadurch, daß der Nord-Süd-Korrekturschaltung NS in dieser Schalterstellung keine störenden hochfrequenten Anteile des Vertikalablenkstromes aufgeschaltet werden, entfällt eine Ausregelung dieser Störgrößen, und die Vertikalrücklaufphase wird verkürzt. Der Schalter S kann mit einem Transistor, vorzugsweise einem Feld-Effekt-Transistor, verwirklicht werden.

## Patentansprüche

1. Verfahren zum Verkürzen der Vertikalrücklaufphase eines Elektronenstrahls in einer Kathodenstrahlröhre, wobei eine Vertikalablenkschaltung (AS) einen Vertikalhin- und -rücklauf bewirkenden Vertikalablenkstrom (Ia) erzeugt, dem ein von einer Nord-Süd-Korrektureinrichtung (NS) erzeugter Korrekturstrom (Ik) überlagert ist,
die Nord-Süd-Korrektureinrichtung (NS) an eine Primärwicklung (PW) und die Vertikalablenkschaltung (AS) an eine Sekundärwicklung (SW) eines Übertragers (ÜT) angeschlossen ist,
**dadurch gekennzeichnet**, daß während der Vertikalrücklaufphase eine Wicklung des Übertragers (ÜT) kurzgeschlossen und die Nord-Süd-Korrektureinrichtung (NS) hochohmig geschaltet wird.

2. Verfahren nach Anspruch 1, **dadurch gekennzeichnet**, daß die Primärwicklung (PW) kurzgeschlossen wird.

3. Verfahren nach Anspruch 1 oder 2, **dadurch gekennzeichnet**, daß die Vertikalablenkschaltung (AS) zu Beginn der Vertikalrücklaufphase einen Steuerimpuls erzeugt, der bewirkt, daß die Primärwicklung (PW) kurzgeschlossen und die Nord-Süd-Korrektureinrichtung (NS) hochohmig geschaltet wird.

## Claims

1. Method for shortening the vertical flyback phase of an electron beam in a cathode ray tube, whereby a vertical deflection circuit (AS) generates a vertical deflection current (Ia) effecting vertical sweep and vertical flyback, on which current there is superimposed a correction current (Ik) generated by a north-south correction device (NS), and whereby the north-south correction device (NS) is connected to a primary winding (PW) and the vertical deflection circuit (AS) is connected to a secondary winding (SW) of a transformer (ÜT), characterized in that during the vertical flyback phase a winding of the transformer (ÜT) is short-circuited and the north-south correction device (NS) is connected to be of high resistance.

2. Method according to claim 1, characterized in that the primary winding (PW) is short-circuited.

3. Method according to claim 1 or 2, characterized in that the vertical deflection circuit (AS) at the beginning of the vertical flyback phase generates a control pulse which has the effect that the primary winding (PW) is short-circuited and the north-south correction device (NS) is connected to be of high resistance.

## Revendications

1. Procédé pour raccourcir la phase de retour vertical d'un faisceau d'électrons dans un tube cathodique, un circuit de déviation verticale (AS) produisant un courant de déviation verticale (Ia) provoquant le balayage aller vertical et le balayage de retour vertical et auquel est superposé un courant de correction (Ik) qui est produit par un dispositif de correction nord-sud (NS), le dispositif de correction nord-sud (NS) étant connecté à un enroulement primaire (PW) alors que le circuit de déviation verticale (AS) est connecté à un enroulement secondaire (SW) d'un transformateur (ÜT), caractérisé par le fait que pendant la phase de retour vertical, un enroulement du transformateur (ÜT) est court-circuité et le dispositif de correction nord-sud (NS) est commuté sur une forte valeur ohmique.

2. Procédé suivant la revendication 1, caractérisé par le fait que l'enroulement primaire (PW) est court-circuité.

3. Procédé suivant la revendication 1 ou 2, caractérisé par le fait que le circuit de balayage vertical (AS) produit, au début de la phase de retour vertical, une impulsion de commande qui agit de telle sorte que l'enroulement primaire (PW) est court-circuité et que le dispositif de correction nord-sud (NS) est commuté sur une forte valeur ohmique.
